# FASCICULE DE BREVET EUROPEEN

(11) **EP 1 867 882 B1**
(45) Date de publication et mention de la délivrance du brevet: **16.02.2011**
(21) Numéro de dépôt: 07290726.4
(22) Date de dépôt: 11.06.2007
(51) Int. Cl.: F16B 13/02, F16B 13/06

(54) **Dispositif d'ancrage à chevilles à ailettes**
Verankerungsvorrichtung mit Flügeldübeln
Anchor device including pins with fins

(30) Priorité: 12.06.2006 FR 0605202
(43) Date de publication de la demande: 19.12.2007
(73) Titulaire: Societe ram Chevilles et Fixations, 91320 Wissous (FR)
(72) Inventeur: Sergent, Gilbert, 92160 Antony (FR)
(74) Mandataire: Bertrand, Didier

(56) Documents cités:
- DE-A1- 1 500 934
- FR-A1- 2 825 133
- US-A- 4 566 832

## Description

La présente invention se rapporte à un dispositif d'ancrage comprenant une cheville à ailettes.

Les chevilles à ailettes sont bien connues et elles sont adaptées à être fixées dans des matériaux relativement durs. Ces chevilles réalisées généralement en matière plastique, présentent classiquement une tige surmontée d'une tête à l'une de ses extrémités, tandis qu'une autre extrémité de la tige est libre. La tige est équipée d'ailettes formées par des couronnes élastiquement déformables et qui s'étendent de proche en proche et de manière concentrique autour d'elle et entre les deux extrémités. Les couronnes présentent des bords francs libres et elle sont reliées à la tige de manière à ce que les plans définis par ces couronnes soient sensiblement perpendiculaires à la tige.

Usuellement, il est d'abord pratiqué une cavité cylindrique dans le matériau, d'un diamètre sensiblement inférieur au diamètre des couronnes précitées, cette cavité cylindrique définissant alors une entrée et une paroi interne. Ensuite, la cheville du type précité est engagée à force dans la cavité cylindrique, les ailettes se déformant alors en fléchissant et en s'inclinant vers la tige et vers la tête de la cheville. Ainsi, les couronnes deviennent sensiblement tronconiques et s'évasent vers l'entrée de la cavité, les bords francs venant alors s'ancrer dans la paroi de la cavité cylindrique. De la sorte, la cheville ne peut plus être extraite de la cavité cylindrique et elle est maintenue bloquée dans le matériau.

On pourra notamment se référer au document FR 2 825 133 A1, lequel décrit une telle cheville en particulier pour la fixation des canalisations.

De telles chevilles sont généralement réalisées matière plastique relativement déformable et elles sont bien adaptées aux matériaux relativement durs. En revanche, lorsque le matériau est friable elles ne sont plus adaptées, car elles tendent à l'effriter.

Le document DE 1 500 934 divulgue un dispositif d'ancrage, comprenant une douille de fixation et une cheville destinée à être introduite à l'intérieur de la douille, adapté aux matériaux friables.

Aussi, un problème qui se pose et que vise à résoudre la présente invention, est de fournir un dispositif d'ancrage qui soit non seulement adapté aux matériaux relativement durs mais aussi, aux matériaux friables.

Dans le but de résoudre ce problème, la présente invention propose un dispositif d'ancrage selon la revendication principale

Ainsi, une caractéristique de l'invention réside dans la mise en oeuvre de la douille de fixation qui est adaptée à être insérée dans une cavité cylindrique pratiquée dans un matériau friable, et qui est aussi adaptée à recevoir une cheville à ailettes classique. De la sorte, les chevilles à ailettes peuvent être à la fois fixées dans des matériaux relativement durs du type béton, et aussi grâce à la douille de fixation, dans des matériaux relativement friables du type plâtre, dans lesquels une cheville à ailettes seule ne peut pas être fixée de manière rigide.

Pour des chevilles à ailettes de même dimension, il sera nécessaire de pratiquer dans le matériau friable des cavités cylindriques d'un diamètre légèrement plus important afin d'y insérer la douille de fixation. En revanche, grâce à sa symétrie cylindrique, identique à celle de la cavité, la douille vient s'appliquer précisément contre la paroi de la cavité cylindrique et la consolide en exerçant des efforts radiaux symétriques et centrifuges contre ladite paroi.

Avantageusement, lesdits organes d'ancrage sont mobiles entre deux positions, une position rétractée, avant l'introduction de la cheville, dans laquelle ils sont logés à l'intérieur de ladite douille de fixation et une position d'ancrage dans laquelle ils s'étendent en saillie de ladite douille de fixation après que la cheville a été engagée dans la douille de fixation. Ainsi, les organes d'ancrage situés initialement à l'intérieur de l'enveloppe définie par la douille de fixation, ne gêne-t-il pas l'introduction de cette dernière dans la cavité cylindrique. Ce n'est qu'en introduisant la cheville à l'intérieur de la douille de fixation que la cheville va venir s'appliquer contre les portées d'appui crantées pour entraîner les organes d'ancrage en saillie de la douille. Les ergots vont alors venir s'ancrer dans le matériau friable et provoquer le blocage de la douille de fixation dans la cavité cylindrique.

De manière préférée, lesdits organes d'ancrage présentent une première extrémité munie desdites portées d'appui crantées et une seconde extrémité montée à pivotement dans ladite douille de fixation. De la sorte, les organes d'ancrage vont venir pivoter en saillie de la douille de fixation lorsque la cheville vient s'appliquer contre les portées d'appui crantées.

Selon un mode de mise en oeuvre de l'invention particulièrement avantageux, ladite seconde extrémité desdits organes d'ancrage est montée à l'opposé de ladite entrée, tandis que ladite première extrémité est orientée vers ladite entrée. De la sorte, lors de son engagement dans la douille de fixation, la cheville va venir s'appliquer en tout premier lieu contre les portées d'appui crantées qui sont situées à l'opposé de l'extrémité montée pivotante. Ainsi, les organes d'ancrage sont entraînés radialement en parapluie dans la cavité cylindrique. En conséquence, tout effort ultérieur visant à extraire la douille de fixation de la cavité cylindrique est vain, puisque les organes d'ancrage vont tendre à s'écarter plus encore de la douille.

En outre, et selon un mode de réalisation préférentiel, lesdites portées d'appui crantées présentent une surface moyenne sensiblement convexe, qui s'étend en saillie à l'intérieur de la douille de fixation avant que la cheville n'y soit introduite, ladite surface convexe présentant une zone lisse située vers ladite première extrémité et une zone rugueuse munie de crans située vers ladite seconde extrémité. De la sorte, lorsque la cheville est engagée dans la douille de fixation, la tige et les couronnes flexibles viennent d'abord s'appliquer contre la zone lisse puis sont entraînées en frottement contre cette zone lisse qui forme alors une rampe ainsi qu'on l'expliquera de manière détaillée ci-après, de manière à provoquer le pivotement des organes d'ancrage ; puis le bord franc des couronnes vient ensuite en prise dans les crans de la zone rugueuse des portées d'appui. Par conséquent, non seulement la douille de fixation vient en prise dans la cavité cylindrique grâce aux organes d'ancrage, mais aussi la cheville à ailettes vient, elle, en prise dans la douille de fixation.

Avantageusement, ladite douille de fixation présente des fenêtres radiales qui débouchent vers l'extérieur de ladite douille de fixation, lesdites fenêtres présentant un premier bord situé vers ladite entrée et un second bord situé à l'opposé de ladite entrée, et lesdits organes d'ancrage sont montés à pivotement dans ledit second bord. Ainsi, durant le mouvement relatif de la cheville à ailettes et de la douille de fixation, lorsque la cheville vient s'appliquer contre les portées d'appui crantées, les organes d'ancrage viennent en saillie de la douille de fixation en traversant les fenêtres radiales. De manière préférentielle, il est pratiqué quatre fenêtres radiales dans la douille de fixation afin de recevoir quatre organes d'ancrage mobiles.

De manière avantageuse, ladite douille de fixation et lesdits organes d'ancrage sont moulés d'une seule pièce en matière plastique, de manière à réaliser un dispositif de fixation à un coût avantageux.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en coupe axiale d'un premier élément du dispositif d'ancrage conforme à l'invention et selon une première variante de réalisation ;
- la Figure 2 est une vue schématique en coupe axiale de l'élément illustré sur la Figure 1 recevant un second élément ;
- la Figure 3 est une vue schématique en coupe axiale illustrant les deux éléments précités dans une première phase ;
- la Figure 4 est une vue schématique en coupe axiale illustrant des deux éléments précités dans une seconde phase ; et,
- la Figure 5 est une vue schématique en coupe axiale d'un premier élément du dispositif d'ancrage selon une seconde variante de réalisation.

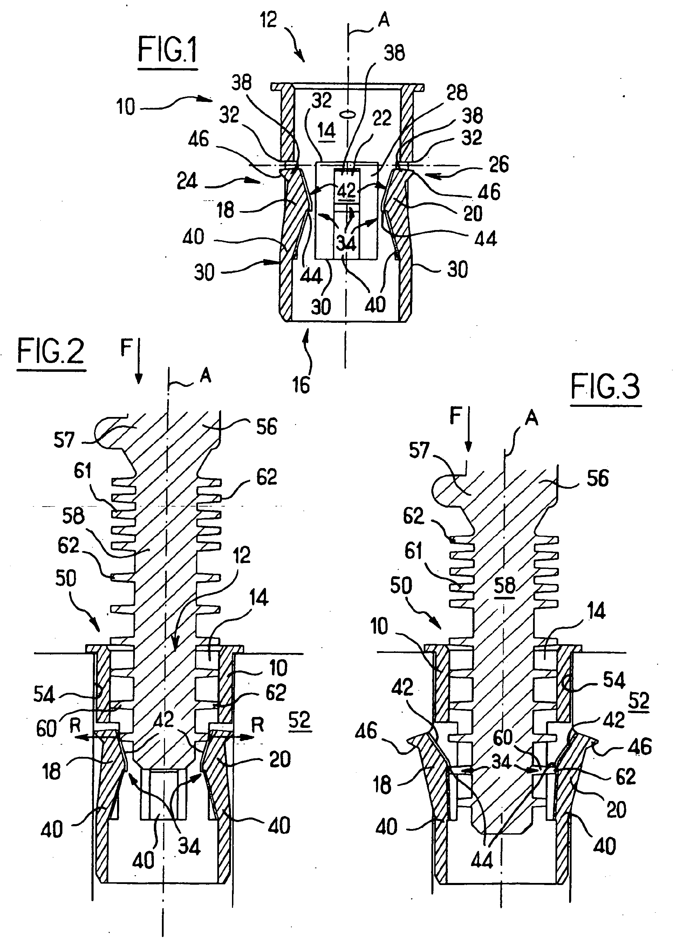

La Figure 1 illustre une douille de fixation 10 présentant une entrée 12 et définissant à l'intérieur, une cavité cylindrique 14 dont la courbe directrice est sensiblement un cercle, le diamètre dudit cercle étant par exemple de 10 mm. La douille de fixation 10 s'étend longitudinalement autour d'un axe de symétrie A sur une longueur, par exemple de 22 mm, et elle présente un fond ouvert 16.

La douille de fixation 10 comprend des organes d'ancrage mobiles, dont deux opposés 18, 20, apparaissent dans le plan de coupe et un autre 22 apparaissant en vue arrière. Un quatrième organe d'ancrage qui n'apparaît pas sur la Figure, s'étend en regard dudit autre organe d'ancrage 22. Les organes d'ancrage, 18, 20, 22, le quatrième et la douille de fixation 10 sont moulés ensemble d'une seule pièce en matière plastique. La douille de fixation 10 présente quatre fenêtres radiales correspondant aux organes d'ancrage et par conséquent, deux premières fenêtres radiales opposées 24, 26 apparaissent dans ledit plan de coupe, une autre 28 apparaissant en vue arrière. Ces fenêtres radiales, débouchent à l'extérieur de la douille de fixation 10 et elles s'étendent longitudinalement sur sensiblement le tiers central de la longueur de la douille 10 entre un bord inférieur 30 situé près du fond ouvert 16 et un bord supérieur 32 situé lui près de l'entrée 12.

Les organes d'ancrage 18, 20, 22 présentent des portées d'appui crantées 34 orientées vers l'intérieur de la douille 10. Ces portées d'appui crantées 34 sont sensiblement convexes et elles font saillie dans la cavité cylindrique 14. Les organes d'ancrage 18, 20, 22 s'étendent entre une première extrémité libre 38 et une seconde extrémité 40 montée à pivotement dans le bord inférieur 30 de leur fenêtre radiale respective. Les portées d'appui crantées 34 présentent une première zone lisse 42 située près de la première extrémité libre 38 et inclinée par rapport à l'axe A dans la direction du fond ouvert 16. Ainsi qu'on l'expliquera ci-après, cette première zone lisse 42 est adaptée à former rampe. En outre, les portées d'appui crantées 34 présentent une seconde zone vers la seconde extrémité 40, qui présente ici un seul cran 44.

Les organes d'ancrage 18, 20, 22 sont munis également d'ergots d'ancrage 46 orientés radialement vers l'extérieur de la cavité cylindrique 14.

On retrouve sur la Figure 2 la douille de fixation 10 engagée dans un orifice 50 pratiqué dans la paroi d'un matériau friable 52. L'orifice 50 définit une paroi interne 54 sensiblement cylindrique contre laquelle vient s'appliquer la paroi externe de la douille de fixation 10. Par ailleurs, une cheville à ailettes 56 munie d'une tête 57, est partiellement engagée dans la cavité cylindrique 14 à travers l'entrée 12. La cheville à ailettes 56 présente une tige 58 pourvue d'une première série de couronnes concentriques 60 espacées les unes des autres, situées vers l'extrémité libre de la tige 58, et d'une seconde série de couronnes concentriques 61 plus rapprochées les unes des autres et situées vers la tête 57. De plus, les couronnes concentriques 60, 61 présentent un bord franc libre 62. La cheville à ailettes est, elle, également moulée d'une seule pièce en matière plastique de telle sorte que les couronnes concentriques 60 sont flexibles et rabattables contre la tige 58.

Le diamètre externe des couronnes concentriques 60 est sensiblement égal au diamètre de la cavité cylindrique 14 de manière à pouvoir y introduire la tige 58 sans effort considérable. Alors que la tige 58 est entraînée en translation dans la cavité 14 selon la flèche F, les couronnes concentriques 60 viennent alors en appui contre la première zone lisse 42 des portées d'appui crantées 34 qui définissent sensiblement un étranglement dans la cavité cylindrique 14.

En poursuivant l'introduction de la tige 58 dans la cavité cylindrique 14, les couronnes concentriques 60 vont être entraînées en frottement contre les premières zones lisses 42 en se déformant, mais aussi en exerçant une effort radial centrifuge R sur les organes d'ancrage 18, 20, dont les ergots 46 font venir s'ancrer dans la paroi interne 54 de l'orifice 50. La Figure 3 à laquelle on se référera maintenant illustre une telle situation.

On retrouve sur cette Figure 3 les éléments référencés sur la Figure 2, la cheville à ailettes 56 ayant été enfoncée plus encore dans la cavité cylindrique 14 ce qui a provoqué le pivotement radial des organes d'ancrage 18, 20. Les ergots 46 s'étendent ainsi en saillie de la douille de fixation 10 et sont ancrés dans la paroi interne 54. On comprend ainsi, que la douille de fixation 10 est maintenant bloquée en translation et ne peut plus être extraite de l'orifice 50 sans endommager la paroi du matériau 52. En outre, le bord franc 62 d'une première couronne concentrique 60 est venu s'encliqueter dans les crans 44 de la seconde zone des portées d'appui crantées 34. Les crans s'étendent légèrement en saillie à l'intérieur de la cavité cylindrique 14, car les efforts de déformation des couronnes concentriques 60 s'équilibrent avec les forces de résistance du matériau 52 lorsque les ergots 46 pénètrent dans la paroi interne 54. De la sorte, les couronnes concentriques 60 fléchissent lorsqu'elles sont entraînées en frottement contre les zones lisses 42 des portées d'appui crantées 34, puis elles tendent à reprendre leur position en regard de la seconde zone derrière les crans 44.

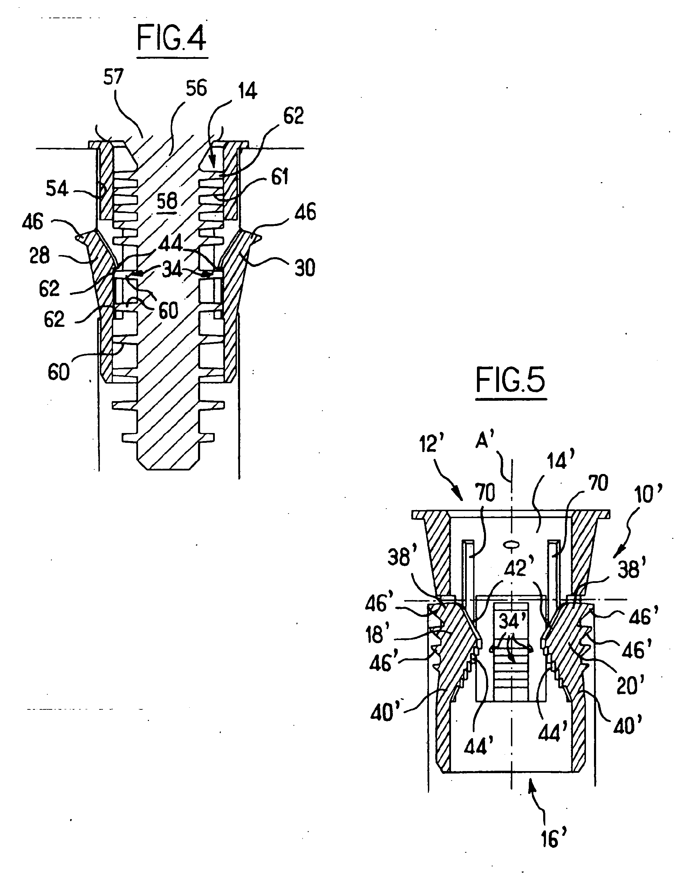

Dans une ultime position illustrée sur la Figure 4, où la tige 58 est entièrement enfoncée dans la cavité cylindrique 14, les couronnes concentriques 60 de ladite première série sont engagées dans la cavité cylindrique 14 au-délà des crans 44. De la sorte, les bords francs 62 sont en appui dans ladite seconde zone des portées d'appui crantées 34 et les couronnes concentriques 60 empêchent ainsi la rétraction des organes d'ancrage 28, 30 dont les ergots 46 sont maintenus ancrés dans la paroi interne 54. Ensuite, grâce aux crans 44 et aux couronnes concentriques 60 de ladite première série, la tige 58 de la cheville 56 ne peut être retirée de la cavité cylindrique 14. Au surplus, les couronnes concentriques 61 de ladite seconde série par l'intermédiaire de leur bord franc 62 qui est lui, en appui contre la paroi interne de la cavité cylindrique 14, accentuent les efforts de frottement et ainsi s'opposent aux efforts d'extraction de la cheville 56 de la cavité cylindrique 14.

On se référera à présent à la Figure 5, pour décrire une douille de fixation selon une seconde variante de réalisation de l'invention. Aussi, les éléments analogues à ceux de la première variante de réalisation illustrée sur les Figures précédentes, porteront la même référence affectée du signe prime : «' ».

Ainsi, la douille de fixation 10' présente une entrée 12' et définit à l'intérieur, une cavité cylindrique 14'. La douille de fixation 10' comprend en outre deux organes d'ancrage mobiles opposés 18', 20' dans le plan de coupe axiale. La différence essentielle par rapport à la variante précédente, réside dans la forme de ses organes d'ancrage mobiles 18' et 20'. Ils présentent des portées d'appui crantées 34' orientées vers l'intérieur de la douille 10' qui sont également sensiblement convexes et qui font saillie dans la cavité cylindrique 14'. Les portées d'appui crantées 34' présentent aussi une première zone lisse 42' située près de la première extrémité libre 38' et inclinée par rapport à l'axe A' dans la direction du fond ouvert 16'. En revanche, les portées d'appui crantées 34' présentent ici une seconde zone vers la seconde extrémité 40', qui présente non pas un seul cran mais une pluralité de crans 44' qui s'étendent sur toute la seconde zone. De la sorte, une pluralité de couronnes concentriques 60 de ladite première série de la tige 58 illustrée par exemple sur la Figure 4, sont adaptées à venir en prise dans ladite pluralité de crans 44' pour mieux bloquer encore en translation la tige 58 à l'intérieur de la cavité cylindrique 14'.

Avantageusement, des nervures axiales longitudinales 70 sont ménagées dans la paroi interne de la cavité cylindrique 14' et elles s'étendent depuis l'entrée 12' jusqu'au niveau des organes d'ancrage 18', 20'. En outre, pour des raisons techniques de production, le diamètre de la cavité cylindrique 14' et le diamètre de la seconde série de couronnes concentriques sont dans un rapport sensiblement supérieur à celui du dispositif d'ancrage selon la première variante de réalisation. Aussi, les bords francs 62 des couronnes concentriques 61 de ladite seconde série, viennent en prise glissante essentiellement contre ces nervures axiales longitudinales 70. De la sorte, la douille de fixation 10' offre à la cheville une moins grande résistance à l'enfoncement, ce qui est avantageux dans les matériaux très friables, car cela évite de forcer la douille dans l'épaisseur du matériau. Inversement, la paroi interne de la cavité cylindrique 14' offre une moindre résistance à l'extraction. Toutefois, cette dernière est très largement compensée par la pluralité de crans 44', une pluralité d'ailettes de la première série étant adaptée à venir dans les crans 44' de ladite pluralité de crans 44'.

Par ailleurs, les organes d'ancrage 18', 20', sont munis chacun d'une pluralité d'ergots d'ancrage 46' orientés radialement vers l'extérieur de la cavité cylindrique 14'. De la sorte, on multiplie les points d'ancrage à l'intérieur de la paroi interne de l'orifice pratiqué dans la paroi du matériau.

Une telle douille de fixation 10' est bien adaptée aux matériaux très friables, tandis que la douille de fixation 10 selon la première variante de réalisation, est adaptée aux matériaux moins friables.

## Revendications

1. Dispositif d'ancrage destiné à être engagé à travers une paroi d'un matériau friable (52), ledit dispositif d'ancrage comprenant une douille de fixation (10) et une cheville à ailettes (56), ladite douille de fixation (10) présentant une entrée (12 ; 12') et une cavité cylindrique (14 ; 14') à l'intérieur de ladite douille, ladite douille étant munie d'organes d'ancrage mobiles (18, 20, 22 ; 18', 20'), chaque organe d'ancrage mobile présentant, vers l'intérieur de ladite cavité cylindrique, au moins une portée d'appui crantées (34 ; 34') et vers l'extérieur, au moins un ergot d'ancrage (46 ; 46'), ladite cheville présentant une tige (58) et des ailettes, ladite cheville (56) étant adaptée à venir exercer un effort centrifuge sur lesdits organes d'ancrage (18, 20, 22 ; 18', 20') lorsqu'elle est introduite par ladite entrée (12 ; 12') à l'intérieur de ladite douille (10 ; 10') ;
**caractérisé en ce que** lesdites ailettes sont formées par des couronnes (60, 61) élastiquement flexibles qui s'étendent de proche en proche et de manière concentrique autour de ladite tige, lesdites couronnes présentant un bord franc (62) situé à distance de ladite tige (58),
et **en ce que** lesdites ailettes sont adaptées à fléchir et à s'incliner vers ladite tige lorsque ladite cheville (56) est engagée dans ladite cavité cylindrique, de façon que le bord franc (62) d'au moins une couronne concentrique vienne en prise dans lesdites portées d'appui crantées (34 ; 34'), tandis que les efforts de déformation des couronnes concentriques (60) s'équilibrent avec les forces de résistance du matériau friable (52) lorsque les ergots (46) y pénètrent.

2. Dispositif d'ancrage selon la revendication 1, **caractérisé en ce que** lesdits organes d'ancrage (18, 20, 22 ; 18', 20') sont mobiles entre deux positions, une position rétractée dans laquelle ils sont logés à l'intérieur de ladite douille de fixation (10 ; 10') et une position d'ancrage dans laquelle ils s'étendent en saillie de ladite douille de fixation.

3. Dispositif d'ancrage selon la revendication 1 ou 2, **caractérisé en ce que** lesdits organes d'ancrage (18, 20, 22 ; 18', 20') présentent une première extrémité (38 ; 38') munie desdites portées d'appui crantées (34 ; 34') et une seconde extrémité (40 ; 40') montée à pivotement dans ladite douille de fixation (10 ; 10').

4. Dispositif d'ancrage selon la revendication 3, **caractérisé en ce que** ladite seconde extrémité (40 ; 40') desdits organes d'ancrage (18, 20, 22 ; 18', 20') est montée à l'opposé de ladite entrée (12 ; 12'), tandis que ladite première extrémité (38 ; 38') est orientée vers ladite entrée.

5. Dispositif d'ancrage selon la revendication 3 ou 4, **caractérisé en ce que** lesdites portées d'appui crantées (34,34') présentent une surface moyenne sensiblement convexe, ladite surface convexe présentant une zone lisse située vers ladite première extrémité (38 ; 38') et une zone rugueuse munie de crans située vers ladite seconde extrémité (40 ; 40').

6. Dispositif d'ancrage selon l'une quelconque des revendications 1 à 5, **caractérisé en ce que** ladite douille de fixation (10 ; 10') présente des fenêtres radiales (24, 26, 28) qui débouchent vers l'extérieur de ladite douille de fixation , lesdites fenêtres présentant un premier bord (32) situé vers ladite entrée (12) et un second bord (30) situé à l'opposé de ladite entrée, et **en ce que** lesdits organes d'ancrage (18, 20, 22) sont montés à pivotement dans ledit second bord (30).

7. Dispositif d'ancrage selon l'une quelconque des revendications 1 à 6, **caractérisé en ce que** ladite douille de fixation est munie de quatre organes d'ancrage mobiles.

8. Dispositif d'ancrage selon l'une quelconque des revendications 1 à 7, **caractérisé en ce que** ladite douille de fixation (10 ; 10') et lesdits organes d'ancrage (18, 20, 22 ; 18', 20') sont moulés d'une seule pièce en matière plastique.

## Claims

1. An anchoring device intended to be engaged through a wall of a friable material (52), said anchoring device comprising a fixing sleeve (10) and a peg (56) provided with wings, said fixing sleeve (10) having an inlet (12 ; 12') and a cylindrical cavity (14 ; 14') within said sleeve, said sleeve being provided with movable anchoring members (18, 20, 22 ; 18', 20'), each movable anchoring member having, at the inside of said cylindrical cavity, at least a notched bearing area (34 ; 34') and at the outside, at least an anchoring spur (46 ;46'), said peg having a stem (58) and wings, said peg (56) being adapted to exert a centrifugal force on said anchoring members (18, 20, 22 ; 18', 20') when it is introduced by said inlet (12 ; 12') within said sleeve (10 ; 10') ;
**characterized in that** said wings are formed by elastically flexible crowns (60, 61) which extend gradually and in a concentric way around said stem, said crowns having a sharp edge (62) remotely located from said stem (58),
and **in that** said wings are adapted to bend and to slope towards said stem when said peg (56) is inserted into said cylindrical cavity, so that the sharp edge (62) of at least one concentric crown is engaged into said notched bearing areas (34 ; 34'), while the deformation forces of the concentric crowns (60) are balanced with the resistive forces of the friable material (52) when the spurs (46) penetrate therein.

2. The anchoring device according to claim 1, **characterized in that** said anchoring members (18, 20, 22 ; 18', 20') are movable between two positions, a retracted position where they are located within said fixing sleeve (10 ; 10') and an anchoring position where they project from said fixing sleeve.

3. The anchoring device according to claim 1 or 2, **characterized in that** said anchoring members (18, 20, 22 ; 18', 20') have a first end (38 ; 38') provided with said notched bearing areas (34 ; 34') and a second end (40 ; 40') swivellingly mounted within said fixing sleeve (10 ; 10').

4. The anchoring device according to claim 3, **characterized in that** said second end (40 ; 40') of said anchoring members (18, 20, 22 ; 18', 20') is mounted at the opposite of said inlet (12 ; 12'), while said first end (38 ; 38') is directed towards said inlet.

5. The anchoring device according to claim 3 or 4, **characterized in that** said notched bearing areas (34, 34') present a substantially convex mean surface, said convex surface having a smooth area located at said first end (38 ; 38') and a rough area provided with notches located at said second end (40 ; 40').

6. The anchoring device according to any of claims 1 to 5, **characterized in that** said fixing sleeve (10 ; 10') includes radial windows (24, 26, 28) which open to the outside of said fixing sleeve, said windows having a first edge (32) located at said inlet (12) and a second edge (30) located at the opposite of said inlet, and **in that** said anchoring members (18, 20, 22) are mounted swivellingly into said second edge (30).

7. The anchoring device according to any of claims 1 to 6, **characterized in that** said fixing sleeve is provided with four movable anchoring members.

8. The anchoring device according to any of claims 1 to 7, **characterized in that** said fixing sleeve (10 ; 10') and said anchoring members (18, 20, 22 ; 18', 20') are molded as only one part with plastic.

## Patentansprüche

1. Verankerungsvorrichtung, die dazu vorgesehen ist, durch eine Wand aus einem brüchigen Material (52) in Eingriff gebracht zu werden, wobei die Verankerungsvorrichtung eine Befestigungshülse (10) und einen Dübel mit Stegen (56) aufweist, wobei die Befestigungshülse (10) einen Einlass (12; 12') und einen zylindrischen Hohlraum (14; 14') im Inneren der Hülse aufweist, wobei die Hülse mit beweglichen Verankerungsorganen (18, 20, 22; 18', 20') versehen ist, wobei jedes bewegliche Verankerungsorgan einwärts in den zylindrischen Hohlraum wenigstens einen gerippten Abstützbereich (34; 34') und auswärts wenigstens eine Verankerungsnase (46; 46') aufweist, wobei der Dübel einen Stift (58) und Stege aufweist, wobei der Dübel (56) dazu ausgelegt ist, auf die Verankerungsorgane (18, 20, 22; 18', 20') eine Zentrifugalbeanspruchung auszuüben, wenn er durch den Einlass (12; 12') in den Innenraum der Hülse (10; 10') eingeführt wird;
**dadurch gekennzeichnet, dass** die Stege durch elastisch biegsame Kränze (60, 61) gebildet sind, die sich nahe beieinander und konzentrisch um den Stift erstrecken, wobei die Kränze einen freien Rand (62) aufweisen, der sich in einem Abstand vom Stift (58) befindet,
und dass die Stege dazu ausgelegt sind, sich zu biegen und zu dem Stift zu neigen, wenn der Dübel (56) in dem zylindrischen Hohlraum in Eingriff ist, so dass der freie Rand (62) wenigstens eines konzentrischen Kranzes in den gerippten Abstützbereichen (34; 34') in Eingriff gelangt, während sich die Kräfte für die Verformung der konzentrischen Kränze (60) und die Widerstandskräfte des brüchigen Materials (52) aufheben, wenn die Ansätze (46) darin eindringen.

2. Verankerungsvorrichtung nach Anspruch 1, **dadurch gekennzeichnet, dass** die Verankerungsorgane (18, 20, 22; 18', 20') zwischen zwei Positionen beweglich sind, einer zurückgezogenen Position, in der sie sich in der Befestigungshülse (10; 10') befinden, und einer Verankerungsposition, in der sie sich vorstehend aus der Befestigungshülse erstrecken.

3. Verankerungsvorrichtung nach Anspruch 1 oder 2, **dadurch gekennzeichnet, dass** die Verankerungsorgane (18, 20, 22; 18', 20') ein erstes Ende (38; 38'), das mit den gerippten Abstützbereichen (34; 34') versehen ist, und ein zweites Ende (40; 40'), das in der Befestigungshülse (10; 10') schwenkbar angebracht ist, aufweisen.

4. Verankerungsvorrichtung nach Anspruch 3, **dadurch gekennzeichnet, dass** das zweite Ende (40; 40') der Verankerungsorgane (18, 20, 22; 18', 20') gegenüber dem Einlass (12; 12') angebracht ist, während das erste Ende (38; 38') zum Einlass orientiert ist.

5. Verankerungsvorrichtung nach Anspruch 3 oder 4, **dadurch gekennzeichnet, dass** die gerippten Abstützbereiche (34, 34') eine im Wesentlichen konvexe mittlere Oberfläche aufweisen, wobei die konvexe Oberfläche eine glatte Zone aufweist, die sich in der Umgebung des ersten Endes (38; 38') befindet, und eine raue Zone aufweist, die mit Rippen versehen ist, die sich in der Umgebung des zweiten Endes (40; 40') befindet.

6. Verankerungsvorrichtung nach einem der Ansprüche 1 bis 5, **dadurch gekennzeichnet, dass** die Befestigungshülse (10; 10') radiale Fenster (24, 26, 28) aufweist, die in die äußere Umgebung der Befestigungshülse münden, wobei die Fenster einen ersten Rand (32), der sich in der Umgebung des Einlasses (12) befindet, und einen zweiten Rand (30), der sich gegenüber dem Einlass befindet, aufweisen, und dass die Verankerungsorgane (18, 20, 22) in dem zweiten Rand (30) schwenkbar angebracht sind.

7. Verankerungsvorrichtung nach einem der Ansprüche 1 bis 6, **dadurch gekennzeichnet, dass** die Befestigungshülse mit vier beweglichen Verankerungsorganen versehen ist.

8. Verankerungsvorrichtung nach einem der Ansprüche 1 bis 7, **dadurch gekennzeichnet, dass** die Befestigungshülse (10; 10') und die Verankerungsorgane (18, 20, 22; 18', 20') einteilig aus Kunststoff gegossen sind.
